# EUROPÄISCHE PATENTSCHRIFT

(11) **EP 3 380 749 B1**
(45) Veröffentlichungstag und Bekanntmachung des Hinweises auf die Patenterteilung: **02.10.2019**
(21) Anmeldenummer: 16798395.6
(22) Anmeldetag: 05.10.2016
(51) Int. Cl.: F16F 15/14

(54) **FLIEHKRAFTPENDEL**
CENTRIFUGAL PENDULUM
PENDULE CENTRIFUGE

(30) Priorität: 26.11.2015 DE 102015223426
(43) Veröffentlichungstag der Anmeldung: 03.10.2018
(73) Patentinhaber: Schaeffler Technologies AG & Co. KG, 91074 Herzogenaurach (DE)
(72) Erfinder: JUNKER, Uli, 77652 Offenburg (DE); SCHILLING, Kornelia, 70825 Korntal-Münchingen (DE)
(86) Internationale Anmeldenummer: PCT/DE2016/200463
(87) Internationale Veröffentlichungsnummer: WO 2017/088860

(56) Entgegenhaltungen:
- WO-A1-2015/149802
- DE-A1-102012 204 222

## Beschreibung

Die Erfindung betrifft ein Fliehkraftpendel zur Dämpfung von über eine Antriebswelle eines Kraftfahrzeugmotors eingeleiteten Drehungleichförmigkeiten, mit deren Hilfe ein der Drehungleichförmigkeit entgegen gerichtetes Rückstellmoment erzeugt werden kann.

Beispielsweise aus DE 10 2008 059 297 A1 ist ein Fliehkraftpendel bekannt, bei dem eine über in entsprechenden Laufbahnen geführte Laufrollen relativ zu einem Trägerflansch verlagerbare Pendelmasse vorgesehen ist, die bei einer Drehzahlschwankung ein der Drehzahlschwankung entgegen gerichtetes Rückstellmoment zur Dämpfung der Drehzahlschwankung erzeugen kann. Der Trägerflansch weist zwei über Abstandsbolzen miteinander verbundene Flanschteile auf, zwischen denen die Pendelmasse pendeln kann. Die Pendelmasse weist an ihren in tangentialer Richtung weisenden Endseiten jeweils ein Pufferelement aus einem elastischen Gummimaterial auf, das bei Erreichung eines maximalen Schwingwinkels der Pendelmasse an dem jeweils zugeordneten Abstandsbolzen des Trägerflanschs anschlagen kann.

Weiterhin offenbart das Dokument WO2015/149802A ein Fliehkraftpendel entsprechend dem Oberbegriff des Anspruchs 1.

Es besteht ein ständiges Bedürfnis die Lebensdauer eines Fliehkraftpendels zu erhöhen.

Es ist die Aufgabe der Erfindung Maßnahmen aufzuzeigen, die ein Fliehkraftpendel mit einer hohen Lebensdauer ermöglichen.

Die Lösung der Aufgabe erfolgt erfindungsgemäß durch ein Fliehkraftpendel mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist ein Fliehkraftpendel zur Dämpfung von über eine Antriebswelle eines Kraftfahrzeugmotors eingeleiteten Drehungleichförmigkeiten vorgesehen mit einem um eine Drehachse drehbaren Trägerflansch, einer relativ zu dem Trägerflansch pendelbar an dem Trägerflansch geführten ersten Pendelmasse zur Erzeugung eines der Drehungleichförmigkeit entgegen gerichteten Rückstellmoments, einer relativ zu dem Trägerflansch pendelbar an dem Trägerflansch geführten und zu der ersten Pendelmasse in Umfangsrichtung versetzt angeordneten zweiten Pendelmasse zur Erzeugung eines der Drehungleichförmigkeit entgegen gerichteten Rückstellmoments und einem an der ersten Pendelmasse und an der zweiten Pendelmasse anschlagbaren Anschlagdämpfer zur Dämpfung eines Anschlagens der Pendelmassen, wobei der Anschlagdämpfer an einer von einem Großteil der ersten Pendelmasse weg weisenden ersten Stirnseite an einer ersten Anschlagfläche der ersten Pendelmasse und an einer von einem Großteil der zweiten Pendelmasse weg weisenden zweiten Stirnseite an einer zweiten Anschlagfläche der zweiten Pendelmasse anschlagbar ist.

Durch den Anschlagdämpfer kann ein Anschlagen der in Umfangsrichtung nachfolgenden Pendelmassen gedämpft werden, so dass auf die Pendelmassen geringe Bauteilbelastungen einwirken und unnötige Anschlaggeräusche vermieden sind. Der Anschlagdämpfer interagiert an der eigentlich von der jeweiligen Pendelmasse weg weisenden Seite mit dieser Pendelmasse. Hierzu können die erste Pendelmasse und die zweite Pendelmasse den Anschlagdämpfer jeweils in Umfangsrichtung umgreifen, so dass der Anschlagdämpfer an den jeweiligen Anschlagflächen anschlagen kann. Wenn sich die Pendelmassen voneinander weg bewegen, können die entsprechenden Anschlagflächen an dem Anschlagdämpfer anschlagen. Dadurch kann der Anschlagdämpfer komprimiert werden, wodurch die Bewegung der Pendelmassen voneinander weg abgebremst und blockiert werden kann. Dadurch kann vermieden werden, dass die Pendelmassen in unterschiedliche Umfangsrichtungen asynchron pendeln und mit einer entsprechend hohen Relativgeschwindigkeit aufeinander zu zurückpendeln können. Durch die den Anschlagdämpfer hintergreifenden Anschlagflächen der Pendelmassen kann eine Bewegung der Pendelmassen in unterschiedliche Umfangsrichtungen und ein hartes Anschlagen bei einer Bewegung aufeinander zu verhindert werden, so dass ein Fliehkraftpendel mit einer hohen Lebensdauer ermöglicht ist.

Wenn sich die Pendelmassen aufeinander zu bewegen, kann vorgesehen sein, dass sich die Pendelmassen ebenfalls über den Anschlagdämpfer aneinander abstützen, indem beispielsweise der Anschlagdämpfer an seiner zur jeweiligen Pendelmasse weisenden Stirnseite an der jeweiligen Pendelmasse anschlägt. In diesem Fall kann die erste Stirnseite an der zweiten Pendelmasse und die zweite Stirnseite an der ersten Pendelmasse anschlagen. Dadurch kann sowohl eine Bewegung der Pendelmassen voneinander weg als auch eine Bewegung der Pendelmassen aufeinander zu von dem Anschlagdämpfer gedämpft werden. Die Bewegungen der Pendelmassen können über den Anschlagdämpfer insoweit gekoppelt sein, dass eine zu starke asynchrone Bewegung voneinander weg und aufeinander zu vermieden werden kann. Insbesondere sind mehrere Pendelmassen im Umfangsrichtung hintereinander vorgesehen, die analog ausgestaltet sind. Das heißt die zweite Pendelmasse kann für die nachfolgende Pendelmasse die erste Pendelmasse darstellen, während die nachfolgende Pendelmasse die zweite Pendelmasse ist, und so weiter. Dadurch können alle Pendelmassen im Wesentlichen identisch ausgestaltet sein und als Gleichteile kostengünstig hergestellt werden.

Die mindestens eine Pendelmasse des Fliehkraftpendels hat unter Fliehkrafteinfluss das Bestreben eine möglichst weit vom Drehzentrum entfernte Stellung anzunehmen. Die "Nulllage" ist also die radial am weitesten vom Drehzentrum entfernte Stellung, welche die Pendelmasse in der radial äußeren Stellung einnehmen kann. Bei einer konstanten Antriebsdrehzahl und konstantem Antriebsmoment wird die Pendelmasse diese radial äußere Stellung einnehmen. Bei Drehzahlschwankungen lenkt die Pendelmasse aufgrund ihrer Massenträgheit entlang ihrer Pendelbahn aus. Die Pendelmasse kann dadurch in Richtung des Drehzentrums verschoben werden. Die auf die Pendelmasse wirkende Fliehkraft wird dadurch aufgeteilt in eine Komponente tangential und eine weitere Komponente normal zur Pendelbahn. Die tangentiale Kraftkomponente stellt die Rückstellkraft bereit, welche die Pendelmasse wieder in ihre "Nulllage" bringen will, während die Normalkraftkomponente auf ein die Drehzahlschwankungen einleitendes Krafteinleitungselement, insbesondere eine mit der Antriebswelle des Kraftfahrzeugmotors verbundene Schwungscheibe, einwirkt und dort ein Gegenmoment erzeugt, das der Drehzahlschwankung entgegenwirkt und die eingeleiteten Drehzahlschwankungen dämpft. Bei besonders starken Drehzahlschwankungen kann die Pendelmasse also maximal ausgeschwungen sein und die radial am weitesten innen liegende Stellung annehmen. Die in dem Trägerflansch und/oder in der Pendelmasse vorgesehenen Bahnen weisen hierzu geeignete Krümmungen auf. Insbesondere ist mehr als eine Pendelmasse vorgesehen. Insbesondere können mehrere Pendelmassen in Umfangsrichtung gleichmäßig verteilt angeordnet sein. Die träge Masse der Pendelmasse und/oder die Relativbewegung der Pendelmasse zum Trägerflansch ist insbesondere zur Dämpfung eines bestimmten Frequenzbereichs von Drehungleichförmigkeiten, insbesondere einer Motorordnung des Kraftfahrzeugmotors, ausgelegt. Insbesondere ist mehr als eine Pendelmasse und/oder mehr als ein Trägerflansch vorgesehen. Beispielsweise ist der Trägerflansch zwischen zwei Pendelmassen angeordnet. Alternativ kann die Pendelmasse zwischen zwei Flanschteilen des Trägerflanschs aufgenommen sein, wobei die Flanschteile beispielsweise Y-förmig miteinander verbunden sind.

Insbesondere ist vorgesehen, dass sich die erste Pendelmasse und die zweite Pendelmasse zumindest in einem von dem Anschlagdämpfer in Umfangsrichtung überspannten Winkelbereich in axialer Richtung betrachtet überdecken. Dadurch kann ein Teil der zweiten Pendelmasse in dem gleichen Radiusbereich wie die erste Pendelmasse den Anschlagdämpfer in Umfangsrichtung umgreifen und umgekehrt. Zusätzlicher radialer Bauraum ist hierzu nicht erforderlich. Stattdessen kann die eine Pendelmasse einen Freiraum ausbilden, in den die andere Pendelmasse mit ihrer Anschlagfläche eingreifen kann, um den Anschlagdämpfer zu umgreifen.

Vorzugsweise weist die erste Pendelmasse eine in axialer Richtung zwischen zwei ersten Deckscheiben angeordnete erste Mittelscheibe auf, wobei die erste Mittelscheibe ein den Anschlagdämpfer aufnehmendes und die erste Anschlagfläche ausbildendes erstes Aufnahmefenster aufweist, wobei die erste Mittelscheibe zusammen mit dem gesamten ersten Aufnahmefenster in Umfangsrichtung von den ersten Deckscheiben absteht. Der in dem ersten Aufnahmefenster angeordnete Anschlagdämpfer kann bei einer Bewegung der Pendelmassen voneinander weg an der von dem ersten Aufnahmefenster ausgebildeten ersten Anschlagfläche anschlagen. Bei einer Bewegung der Pendelmassen aufeinander zu kann der Anschlagdämpfer an einer der ersten Anschlagfläche in Umfangsrichtung gegenüberliegende von dem ersten Aufnahmefenster ausgebildeten ersten Gegenfläche anschlagen. Da sich die ersten Deckscheiben nicht in den Umfangsbereich des ersten Aufnahmefensters hinein erstrecken, verbleibt auf der axialen Breite der Deckscheiben ein Freiraum, der von der zweiten Pendelmasse genutzt werden kann, um den Anschlagdämpfer mit der zweiten Anschlagfläche zu umgreifen. Der axiale Bauraumbedarf wird dadurch gering gehalten.

Besonders bevorzugt weist die zweite Pendelmasse eine in axialer Richtung zwischen zwei zweiten Deckscheiben angeordnete zweite Mittelscheibe auf, wobei zumindest eine zweite Deckscheibe einen von der zweiten Mittelscheibe in Umfangsrichtung abstehenden Steg und einen von dem Steg in radialer Richtung abstehenden die zweite Anschlagfläche ausbildenden Anschlag aufweist. Durch den Steg und den Anschlag kann beispielsweise ein Haken ausgebildet sein, der den Anschlagdämpfer umgreifen kann. Vorzugsweise ist in axialer Richtung zwischen der ersten Mittelscheibe und der zweiten Deckscheibe ein Luftspalt, insbesondere eine Spielpassung, vorgesehen, so dass ein reibungsbehafteter Schleifkontakt zwischen der ersten Mittelscheibe und der zweiten Deckscheibe vermieden ist. Hierzu kann die zweite Deckscheibe in axialer Richtung von der ersten Mittelscheibe weggebogen sein und/oder eine geringere Materialdicke in axialer Richtung als die erste Deckscheibe aufweisen. Beispielsweise ist die zweite Deckscheibe an einer freiliegenden, das heißt von der zweiten Mittelscheibe nicht abgedeckten, zur ersten Mittelscheibe weisenden Innenseite spanabhebend bearbeitet.

Insbesondere weist die zweite Deckscheibe ein den Anschlagdämpfer aufnehmendes und den Steg und den Anschlag ausbildendes zweites Aufnahmefenster auf, wobei die zweite Deckscheibe zusammen mit dem gesamten zweiten Aufnahmefenster in Umfangsrichtung von der zweiten Mittelscheibe absteht. Der insbesondere in dem zweiten Aufnahmefenster angeordnete Anschlagdämpfer kann bei einer Bewegung der Pendelmassen voneinander weg an der von dem zweiten Aufnahmefenster ausgebildeten zweiten Anschlagfläche anschlagen. Bei einer Bewegung der Pendelmassen aufeinander zu kann der Anschlagdämpfer an einer der zweiten Anschlagfläche in Umfangsrichtung gegenüberliegende von dem zweiten Aufnahmefenster ausgebildeten zweiten Gegenfläche anschlagen. Der Anschlagdämpfer kann dadurch sowohl bei einer zu starken Relativbewegung der Pendelmassen voneinander weg als auch aufeinander zu an der zweiten Pendelmasse anschlagen. Ein von der zweiten Pendelmasse ausgebildeter Haken zum Umgreifen des Anschlagdämpfers kann in das zweite Aufnahmefenster integriert sein.

Vorzugsweise ist die Erstreckung des Anschlagdämpfers in Umfangsrichtung geringer als die Erstreckung des ersten Aufnahmefensters und/oder die Erstreckung des zweiten Aufnahmefensters in Umfangsrichtung. Dadurch kann ein bewusster Freiwinkel in Umfangsrichtung vorgesehen sein, in dem die Pendelmassen den Anschlagdämpfer nicht komprimierten. Bei nur geringen asynchronen Bewegungen der Pendelmassen, bei denen ein Anschlagen nicht zu befürchten ist, wird der Anschlagdämpfer im Wesentlichen nicht belastet. Eine ständige dauerhafte Belastung des Anschlagdämpfers ist vermieden. Zudem wird der Anschlagdämpfer nicht einer permanenten wechselnden und/der schwellenden Belastung ausgesetzt, so dass ein Verspröden und/oder ein Ermüdungsbruch vermieden werden kann. Die Lebensdauer des Anschlagdämpfers ist dadurch erhöht.

Besonders bevorzugt ist der Anschlagdämpfer zwischen den zweiten Deckscheiben in axialer Richtung verliersicher aufgenommen. Die zweiten Deckscheiben können beispielsweise in axialer Richtung von der ersten Mittelscheibe weggebogene Flügel im Bereich des zweiten Aufnahmefensters aufweisen, so dass sich in den zweiten Deckscheiben ein kleinerer Öffnungsquerschnitt als die Abmessungen des Anschlagdämpfers ergibt. Durch die verliersichere Aufnahme des Anschlagdämpfers kann verhindert werden, dass der Anschlagdämpfer unter Last oder ohne Belastung aus seiner Aufnahme herausspringt.

Insbesondere ist in einem Winkelbereich zwischen der ersten Anschlagfläche und der zweiten Anschlagfläche radial innerhalb und radial außerhalb zu dem Anschlagdämpfer zwischen dem Anschlagdämpfer und der ersten Pendelmasse und der zweiten Pendelmasse ein Luftspalt vorgesehen. Ein reibungsbehaftetes Schleifen der Pendelmassen an dem Anschlagdämpfer bei einer Relativbewegung in Umfangsrichtung kann dadurch vermieden werden. Gleichzeitig kann ein elastisches Ausweichen des Anschlagdämpfers in radialer Richtung bei einem Komprimieren des Anschlagdämpfers zugelassen werden. Der Anschlagdämpfer kann dadurch beispielsweise aus einem gummiartigen und/oder elastomeren Material hergestellt sein ohne unter Last zu blockieren.

Vorzugsweise ist der Anschlagdämpfer als Schraubenfeder oder Gummiblock ausgestaltet. Der aus einem gummiartigen und/oder elastomeren Material hergestellte Gummiblock kann beispielsweise eine vergleichsweise hohe Dämpfungsleistung aufweisen, so dass entsprechend viel Aufprallenergie bei einem Komprimieren des Anschlagdämpfers dissipiert werden kann. Die Schraubenfeder kann bei einem Komprimieren des Anschlagdämpfers Anschlagenergie speichern und nach einem Abbremsen der Relativbewegung der Pendelmassen die gespeicherte Energie wieder abgeben. Als Anschlagdämpfer können auch andere Dämpferelemente verwendet werden, die insbesondere anhand ihres Federvermögens und Dämpfervermögens für den jeweiligen vorgesehenen Anwendungsfall ausgewählt sein können.

Besonders bevorzugt liegt bei einem minimal möglichen Abstand der ersten Pendelmasse zur zweiten Pendelmasse in Umfangsrichtung die erste Pendelmasse an der zweiten Pendelmasse an, wobei der Anschlagdämpfer nur teilweise komprimiert ist. Eine zu starke Belastung des Anschlagdämpfers bis in den Bereich einer plastischen Verformung des Anschlagdämpfers kann dadurch vermieden werden, wodurch für den Anschlagdämpfer eine entsprechend hohe Lebensdauer erreicht wird. Hierbei wird die Erkenntnis ausgenutzt, dass bis zu einem Berühren der Pendelmassen aneinander die Relativgeschwindigkeit der Pendelmassen durch die elastische Verformung des Anschlagdämpfers bereits so stark abgenommen hat, dass zu starke Bauteilbelastungen und/oder hörbare Anschlaggeräusche in der Regel nicht mehr zu erwarten sind.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische perspektivische Explosionsansicht eines Fliehkraftpendels,
- Fig. 2:: eine schematische perspektivische Explosionsansicht des Fliehkraftpendels aus Fig. 1 im teilweise zusammengesetzten Zustand,
- Fig. 3:: eine schematische perspektivische Schnittansicht des Fliehkraftpendels aus Fig. 1 im zusammengesetzten Zustand,
- Fig. 4:: eine schematische Draufsicht auf die Pendelmassen des Fliehkraftpendels aus Fig. 1 in einer mittleren Nulllage,
- Fig. 5:: eine schematische Draufsicht auf die Pendelmassen des Fliehkraftpendels aus Fig. 1 in einer ausgelenkten Lage und
- Fig. 6:: eine schematische Draufsicht auf die Pendelmassen des Fliehkraftpendels aus Fig. 1 in einer maximal ausgelenkten Lage.

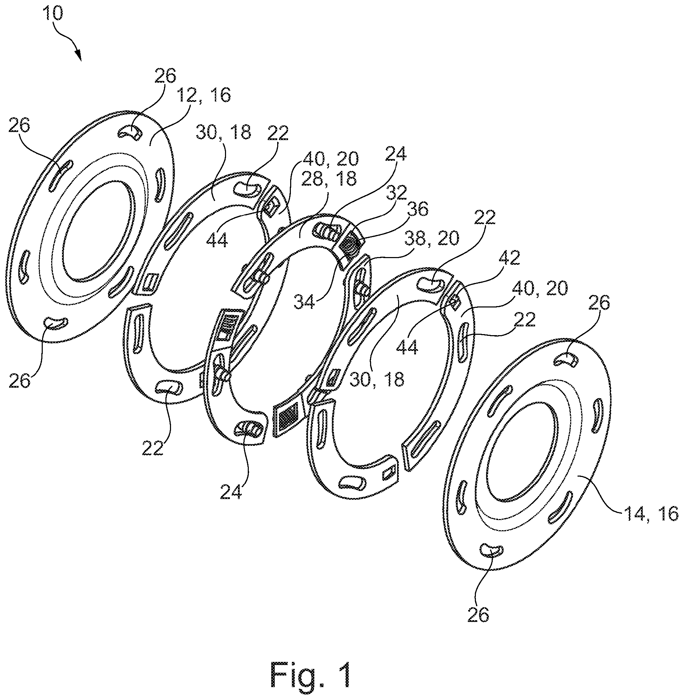

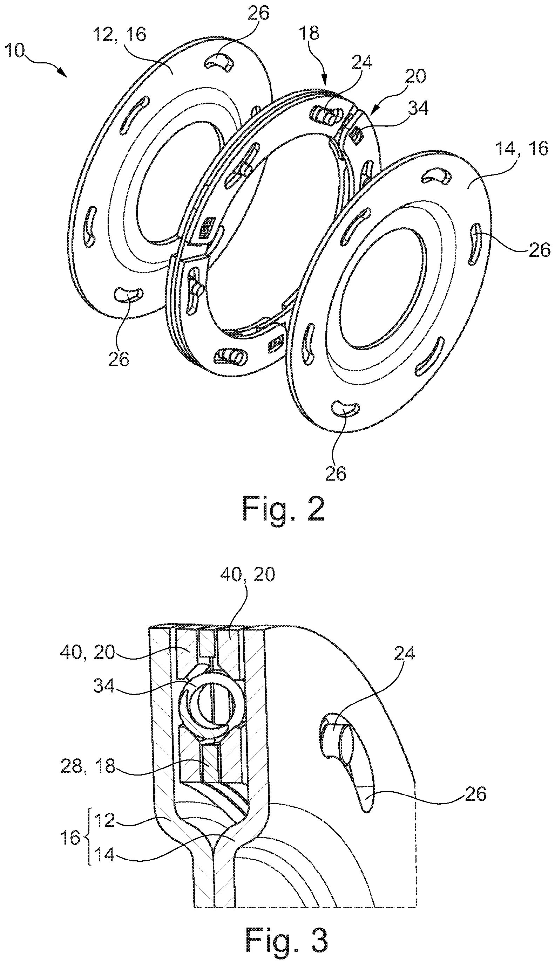

Das in Fig. 1 und Fig. 2 dargestellte Fliehkraftpendel 10 weist einen aus einem ersten Flanschteil 12 und einen zweiten Flanschteil 14 zusammengesetzten Trägerflansch 16 auf. Zwischen den Flanschteilen 12, 14 sind in Umfangsrichtung nachfolgend eine erste Pendelmasse 18 und eine zweite Pendelmasse 20 vorgesehen, die über in Pendelbahnen 22 geführte Laufrollen 24 in Laufbahnen 26 der Flanschteile 12, 14 pendelbar geführt sind. Die erste Pendelmasse 18 weist eine erste Mittelscheibe 28 auf, die in axialer Richtung zwischen zwei ersten Deckscheiben 30 angeordnet ist und in Umfangsrichtung auf die zweite Pendelmasse 20 zu zwischen den ersten Deckscheiben 30 herausragt. In dem herausragenden Bereich der ersten Mittelscheibe 28, der nicht von den ersten Deckscheiben 30 abgedeckt ist, ist ein erstes Aufnahmefenster 32 ausgebildet, in dem ein als Schraubenfeder ausgestalteter Anschlagdämpfer 34 eingesetzt ist. Das erste Aufnahmefenster 32 bildet an der näher zur zweiten Pendelmasse 20 angeordneten Seite eine erste Anschlagfläche 36 aus, an die der Anschlagdämpfer 34 anschlagen kann, wenn sich die erste Pendelmasse 18 und die zweite Pendelmasse 20 voneinander weg bewegen. Die erste Anschlagfläche 36 ist auf einen Großteil der ersten Pendelmasse 18 zu gerichtet und von einem Großteil der zweiten Pendelmasse 20 weg gerichtet.

Die zweite Pendelmasse 20 weist eine zweite Mittelscheibe 38 auf, die in axialer Richtung zwischen zwei zweiten Deckscheiben 40 angeordnet ist. Die zweiten Deckscheiben 40 stehen in Umfangsrichtung auf die erste Pendelmasse 18 zu von der zweiten Mittelscheibe 38 ab. In dem abstehenden Bereich der zweiten Deckscheiben 28, der nicht von den zweiten Mittelscheibe 38 abgedeckt ist, ist jeweils ein zweites Aufnahmefenster 42 ausgebildet, in das der Anschlagdämpfer 34 teilweise hereinragen kann. Das zweite Aufnahmefenster 42 bildet an der näher zur ersten Pendelmasse 18 angeordneten Seite eine zweite Anschlagfläche 44 aus, an die der Anschlagdämpfer 34 anschlagen kann, wenn sich die erste Pendelmasse 18 und die zweite Pendelmasse 20 voneinander weg bewegen. Die zweite Anschlagfläche 44 ist auf einen Großteil der zweiten Pendelmasse 20 zu gerichtet und von einem Großteil der ersten Pendelmasse 18 weg gerichtet. Bei einer Bewegung der ersten Pendelmasse 18 und der zweiten Pendelmasse 20 aufeinander zu kann der Anschlagdämpfer 34 an den zu den Anschlagflächen 36, 44 gegenüberliegenden Gegenflächen anschlagen und dadurch auch diese Relativbewegung der Pendelmassen 18, 20 dämpfen.

Wie in Fig. 3 dargestellt ist in axialer Richtung zwischen der ersten Mittelscheibe 28 und den zweiten Deckscheiben 40 aufgrund einer Spielpassung ein Luftspalt vorgesehen, so dass die zweiten Deckscheiben 40 bei einer Relativbewegung der ersten Pendelmasse 18 zur zweiten Pendelmasse 20 nicht an der ersten Mittelscheibe 28 schleifen. Aus dem gleichen Grund ist in radialer Richtung zwischen dem Anschlagdämpfer 34 einerseits und der ersten Mittelscheibe 28 und den zweiten Deckscheiben 40 andererseits ein Luftspalt vorgesehen. Zusätzlich sind die zweiten Deckscheiben 40 an den in radialer Richtung weisenden Seitenflächen des zweiten Aufnahmefensters 42 angeschrägt, um für den Anschlagdämpfer 34 eine axiale Verliersicherung auszubilden. Ein Teil der zweiten Deckscheiben 40 kann dadurch den Anschlagdämpfer 34 in axialer Richtung betrachtet teilweise abdecken, wobei durch die Anschrägung ein Reibkontakt vermieden ist.

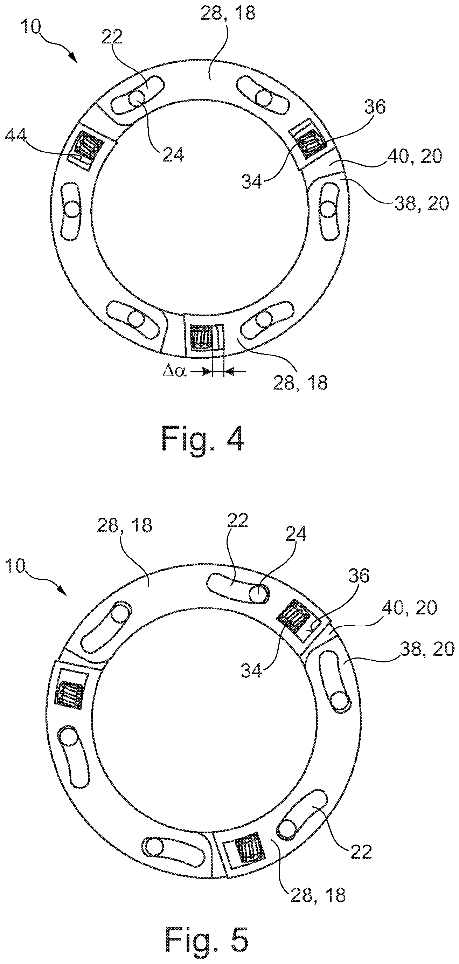

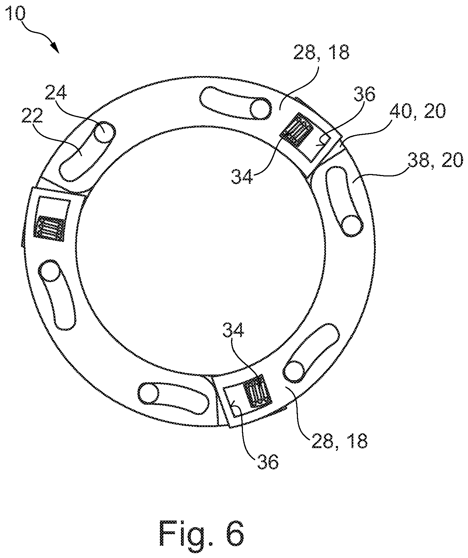

Wie in Fig. 4 dargestellt sind die Aufnahmefenster 32, 42 in Umfangsrichtung länger als der Anschlagdämpfer 34, so dass sich in der dargestellten mittleren Nulllage der Pendelmassen 18, 20 ein Freiwinkel Δα ergibt, um den die Pendelmassen 18, 20 relativ zu einander verdreht werden können, ohne dass der Anschlagdämpfer 34 belastet wird. Insbesondere ist es möglich, dass in der dargestellten Nulllage die Anschlagflächen 36, 44 bereits an dem Anschlagdämpfer 34 im Wesentlichen lastlos anliegen. Dadurch kann eine Relativbewegung der Pendelmassen 18, 20 voneinander weg sofort von dem Anschlagdämpfer 34 gedämpft und blockiert werden. Gleichzeitig kann eine Relativbewegung der Pendelmassen 18, 20 aufeinander zu um den Freiwinkel Δα zugelassen werden, bevor der Anschlagdämpfer 34 wirksam wird, wie in Fig. 5 dargestellt. Bei der in Fig. 6 dargestellten maximal ausgelenkten Lage des Fliehkraftpendels 10 sind die Pendelmassen 18, 20 einander so nahe, dass sich die Mittelscheiben 28, 38 berühren können und eine weitere Bewegung aufeinander zu formschlüssig blockieren können. Ein hartes Anschlagen der Mittelscheiben 28, 38 ist durch die Dämpfungswirkung des Anschlagdämpfers 34 verhindert worden. Gleichzeitig ist verhindert, dass die Laufrolle 24 in der Pendelbahn 22 und/oder in der Laufbahn 26 hart anschlägt oder der Anschlagdämpfer 34 zu stark komprimiert wird.

### Bezugszeichenliste

- 10: Fliehkraftpendel
- 12: erstes Flanschteil
- 14: zweites Flanschteil
- 16: Trägerflansch
- 18: erste Pendelmasse
- 20: zweite Pendelmasse
- 22: Pendelbahn
- 24: Laufrolle
- 26: Laufbahn
- 28: erste Mittelscheibe
- 30: erste Deckscheibe
- 32: erstes Aufnahmefenster
- 34: Anschlagdämpfer
- 36: erste Anschlagfläche
- 38: zweite Mittelscheibe
- 40: zweite Deckscheibe
- 42: zweites Aufnahmefenster
- 44: zweite Anschlagfläche
- Δα: Freiwinkel

## Patentansprüche

1. Fliehkraftpendel zur Dämpfung von über eine Antriebswelle eines Kraftfahrzeugmotors eingeleiteten Drehungleichförmigkeiten, mit
einem um eine Drehachse drehbaren Trägerflansch (16),
einer relativ zu dem Trägerflansch (16) pendelbar an dem Trägerflansch (16) geführten ersten Pendelmasse (18) zur Erzeugung eines der Drehungleichförmigkeit entgegen gerichteten Rückstellmoments,
einer relativ zu dem Trägerflansch (16) pendelbar an dem Trägerflansch (16) geführten und zu der ersten Pendelmasse (18) in Umfangsrichtung versetzt angeordneten zweiten Pendelmasse (20) zur Erzeugung eines der Drehungleichförmigkeit entgegen gerichteten Rückstellmoments und
einem an der ersten Pendelmasse (18) und an der zweiten Pendelmasse (20) anschlagbaren Anschlagdämpfer (34) zur Dämpfung eines Anschlagens der Pendelmassen (18, 20), **dadurch gekennzeichnet, dass** der Anschlagdämpfer (34) an einer von einem Großteil der ersten Pendelmasse (18) weg weisenden ersten Stirnseite an einer ersten Anschlagfläche (36) der ersten Pendelmasse (18) und an einer von einem Großteil der zweiten Pendelmasse(20) weg weisenden zweiten Stirnseite an einer zweiten Anschlagfläche (44) der zweiten Pendelmasse (20) anschlagbar ist.

2. Fliehkraftpendel nach Anspruch 1 **dadurch gekennzeichnet, dass** sich die erste Pendelmasse (18) und die zweite Pendelmasse (20) zumindest in einem von dem Anschlagdämpfer (34) in Umfangsrichtung überspannten Winkelbereich in axialer Richtung betrachtet überdecken.

3. Fliehkraftpendel nach Anspruch 1 oder 2 **dadurch gekennzeichnet, dass** die erste Pendelmasse (18) eine in axialer Richtung zwischen zwei ersten Deckscheiben (30) angeordnete erste Mittelscheibe (38) aufweist, wobei die erste Mittelscheibe (38) ein den Anschlagdämpfer (34) aufnehmendes und die erste Anschlagfläche (36) ausbildendes erstes Aufnahmefenster (32) aufweist, wobei die erste Mittelscheibe (38) zusammen mit dem gesamten ersten Aufnahmefenster (32) in Umfangsrichtung von den ersten Deckscheiben (30) absteht.

4. Fliehkraftpendel nach einem der Ansprüche 1 bis 3 **dadurch gekennzeichnet, dass** die zweite Pendelmasse (20) eine in axialer Richtung zwischen zwei zweiten Deckscheiben (40) angeordnete zweite Mittelscheibe (38) aufweist, wobei zumindest eine zweite Deckscheibe (40) einen von der zweiten Mittelscheibe (38) in Umfangsrichtung abstehenden Steg und einen von dem Steg in radialer Richtung abstehenden die zweite Anschlagfläche (44) ausbildenden Anschlag aufweist.

5. Fliehkraftpendel nach Anspruch 4 **dadurch gekennzeichnet, dass** die zweite Deckscheibe (40) ein den Anschlagdämpfer (34) aufnehmendes und den Steg und den Anschlag ausbildendes zweites Aufnahmefenster (42) aufweist, wobei die zweite Deckscheibe (40) zusammen mit dem gesamten zweiten Aufnahmefenster (42) in Umfangsrichtung von der zweiten Mittelscheibe (38) absteht.

6. Fliehkraftpendel nach einem der Ansprüche 3 bis 5 **dadurch gekennzeichnet, dass** die Erstreckung des Anschlagdämpfers (34) in Umfangsrichtung geringer als die Erstreckung des ersten Aufnahmefensters (32) und/oder die Erstreckung des zweiten Aufnahmefensters (42) in Umfangsrichtung ist.

7. Fliehkraftpendel nach einem der Ansprüche 3 bis 6 **dadurch gekennzeichnet, dass** der Anschlagdämpfer (34) zwischen den zweiten Deckscheiben (40) in axialer Richtung verliersicher aufgenommen ist.

8. Fliehkraftpendel nach einem der Ansprüche 1 bis 7 **dadurch gekennzeichnet, dass** in einem Winkelbereich zwischen der ersten Anschlagfläche (36) und der zweiten Anschlagfläche (44) radial innerhalb und radial außerhalb zu dem Anschlagdämpfer (34) zwischen dem Anschlagdämpfer (34) und der ersten Pendelmasse (18) und der zweiten Pendelmasse (20) ein Luftspalt vorgesehen ist.

9. Fliehkraftpendel nach einem der Ansprüche 1 bis 8 **dadurch gekennzeichnet, dass** der Anschlagdämpfer (34) als Schraubenfeder oder Gummiblock ausgestaltet ist.

10. Fliehkraftpendel nach einem der Ansprüche 1 bis 9 **dadurch gekennzeichnet, dass** bei einem minimal möglichen Abstand der ersten Pendelmasse (18) zur zweiten Pendelmasse (20) in Umfangsrichtung die erste Pendelmasse (18) an der zweiten Pendelmasse (20) anliegt, wobei der Anschlagdämpfer (34) nur teilweise komprimiert ist.

## Claims

1. Centrifugal force pendulum for damping rotational non-uniformities which are introduced via a drive shaft of a motor vehicle engine, having
a carrier flange (16) which can be rotated about a rotational axis,
a first pendulum mass (18) which is guided on the carrier flange (16) such that it can swing relative to the carrier flange (16) for the generation of a self-aligning torque which is directed counter to the rotational nonuniformity,
a second pendulum mass (20) which is guided on the carrier flange (16) such that it can swing relative to the carrier flange (16) and which is arranged offset in the circumferential direction with respect to the first pendulum mass (18) for the generation of a self-aligning torque which is directed counter to the rotational nonuniformity, and
a stop damper (34) which can come into contact with the first pendulum mass (18) and with the second pendulum mass (20) for damping a contact of the pendulum masses (18, 20), **characterized in that**,
on a first end side which points away from a majority of the first pendulum mass (18), the stop damper (34) can come into contact with a first stop face (36) of the first pendulum mass (18) and, on a second end side which points away from a majority of the second pendulum mass (20), can come into contact with a second stop face (44) of the second pendulum mass (20).

2. Centrifugal force pendulum according to Claim 1, **characterized in that** the first pendulum mass (18) and the second pendulum mass (20) overlap as viewed in the axial direction at least in an angular range which is spanned in the circumferential direction by the stop damper (34).

3. Centrifugal force pendulum according to Claim 1 or 2, **characterized in that** the first pendulum mass (18) has a first centre disc (38) which is arranged in the axial direction between two first cover discs (30), the first centre disc (38) having a first receiving window (32) which receives the stop damper (34) and configures the first stop face (36), the first centre disc (38) projecting together with the entire first receiving window (32) from the first cover discs (30) in the circumferential direction.

4. Centrifugal force pendulum according to one of Claims 1 to 3, **characterized in that** the second pendulum mass (20) has a second centre disc (38) which is arranged in the axial direction between two second cover discs (40), at least one second cover disc (40) having a web which projects from the second centre disc (38) in the circumferential direction and a stop which projects from the web in the radial direction and configures the second stop face (44).

5. Centrifugal force pendulum according to Claim 4, **characterized in that** the second cover disc (40) has a second receiving window (42) which receives the stop damper (34) and configures the web and the stop, the second cover disc (40) projecting together with the entire second receiving window (42) from the second centre disc (38) in the circumferential direction.

6. Centrifugal force pendulum according to one of Claims 3 to 5, **characterized in that** the extent of the stop damper (34) in the circumferential direction is smaller than the extent of the first receiving window (32) and/or the extent of the second receiving window (42) in the circumferential direction.

7. Centrifugal force pendulum according to one of Claims 3 to 6, **characterized in that** the stop damper (34) is received captively in the axial direction between the second cover discs (40).

8. Centrifugal force pendulum according to one of Claims 1 to 7, **characterized in that** an air gap is provided in an angular range between the first stop face (36) and the second stop face (44) radially inside and radially outside the stop damper (34) between the stop damper (34) and the first pendulum mass (18) and the second pendulum mass (20).

9. Centrifugal force pendulum according to one of Claims 1 to 8, **characterized in that** the stop damper (34) is configured as a helical spring or rubber block.

10. Centrifugal force pendulum according to one of Claims 1 to 9, **characterized in that**, in the case of a minimum possible spacing of the first pendulum mass (18) from the second pendulum mass (20) in the circumferential direction, the first pendulum mass (18) bears against the second pendulum mass (20), the stop damper (34) being compressed merely partially.

## Revendications

1. Pendule centrifuge destiné à l'amortissement d'irrégularités de rotation introduites par l'arbre d'entraînement d'un moteur de véhicule automobile, le pendule centrifuge comprenant une bride de support (16) qui peut tourner sur un axe de rotation, une première masse pendulaire (18) qui est guidée sur la bride de support (16) de manière à pouvoir osciller par rapport à la bride de support (16) et qui est destinée à générer un couple de rappel opposé aux irrégularités de rotation, une deuxième masse pendulaire (20) qui est guidée sur la bride de support (16) de manière à pouvoir osciller par rapport à la bride de support (16), qui est disposée de manière décalée dans la direction périphérique par rapport à la première masse pendulaire (18) et qui est destinée à générer un couple de rappel opposé aux irrégularités de rotation et un amortisseur de butée (34) qui peut venir en butée sur la première masse pendulaire (18) et la deuxième masse pendulaire (20) et qui est destiné à amortir la butée des masses pendulaires (18, 20), **caractérisé en ce que** l'amortisseur de butée (34) peut venir en butée sur un premier côté frontal, tourné à l'opposé de la plus grande partie de la première masse pendulaire (18), d'une première surface de butée (36) de la première masse pendulaire (18) et sur un deuxième côté frontal, tourné à l'opposé de la plus grande partie de la première masse pendulaire (20), d'une deuxième surface de butée (44) de la deuxième masse pendulaire (20).

2. Pendule centrifuge selon la revendication 1, **caractérisé en ce que** la première masse pendulaire (18) et la deuxième masse pendulaire (20) se recouvrent, lorsque l'on observe dans la direction axiale, au moins dans une plage angulaire couverte par l'amortisseur de butée (34) dans la direction circonférentielle.

3. Pendule centrifuge selon la revendication 1 ou 2, **caractérisé en ce que** la première masse pendulaire (18) comporte un premier disque central (38) qui est disposé dans la direction axiale entre deux premiers disques de recouvrement (30), le premier disque central (38) comportant une première fenêtre de réception (32) qui reçoit l'amortisseur de butée (34) et qui forme la première surface de butée (36), le premier disque central (38) faisant saillie des premiers disques de recouvrement (30) dans la direction circonférentielle conjointement avec la totalité de la première fenêtre de réception (32).

4. Pendule centrifuge selon l'une des revendications 1 à 3, **caractérisé en ce que** la deuxième masse pendulaire (20) comporte un deuxième disque central (38) qui est disposé dans la direction axiale entre deux deuxièmes plaques de recouvrement (40), au moins un deuxième disque de recouvrement (40) comportant une nervure qui fait saillie du deuxième disque central (38) dans la direction circonférentielle et une butée qui fait saillie de la nervure dans la direction radiale et qui forme la deuxième surface de butée (44).

5. Pendule centrifuge selon la revendication 4, **caractérisé en ce que** le deuxième disque de recouvrement (40) comporte une deuxième fenêtre de réception (42) qui reçoit l'amortisseur de butée (34) et qui forme la nervure et la butée, le deuxième disque de recouvrement (40) faisant saillie du deuxième disque central (38) dans la direction circonférentielle conjointement avec la deuxième fenêtre de réception (42) .

6. Pendule centrifuge selon l'une des revendications 3 à 5, **caractérisé en ce que** l'extension de l'amortisseur de butée (34) dans la direction circonférentielle est inférieure à l'extension de la première fenêtre de réception (32) et/ou à l'extension de la deuxième fenêtre de réception (42) dans la direction circonférentielle.

7. Pendule centrifuge selon l'une des revendications 3 à 6, **caractérisé en ce que** l'amortisseur de butée (34) est reçu de manière captive dans la direction axiale entre les deuxièmes disques de recouvrement (40) .

8. Pendule centrifuge selon l'une des revendications 1 à 7, **caractérisé en ce que**, dans une plage angulaire comprise entre la première surface de butée (36) et la deuxième surface de butée (44), un intervalle d'air est ménagé entre l'amortisseur de butée (34) et la première masse pendulaire (18) et la deuxième masse pendulaire (20) radialement à l'intérieur et radialement à l'extérieur par rapport à l'amortisseur de butée (34).

9. Pendule centrifuge selon l'une des revendications 1 à 8, **caractérisé en ce que** l'amortisseur de butée (34) est réalisé sous la forme d'un ressort hélicoïdal ou d'un bloc en caoutchouc.

10. Pendule centrifuge selon l'une des revendications 1 à 9, **caractérisé en ce que**, pour une distance minimale possible entre la première masse pendulaire (18) et la deuxième masse pendulaire (20) dans la direction circonférentielle, la première masse pendulaire (18) vient en appui sur la deuxième masse pendulaire (20), l'amortisseur de butée (34) n'étant que partiellement comprimé.
